# EUROPEAN PATENT APPLICATION

(11) **EP 1 318 470 A2**
(43) Date of publication of application: **11.06.2003**
(21) Application number: 02258387.6
(22) Date of filing: 04.12.2002
(51) Int. Cl.: G06F 17/60

(54) **Method and device for dispensing electronic information**

(30) Priority: 06.12.2001 US 14059
(71) Applicant: Nokia Corporation, 02150 Espoo (FI)
(72) Inventor: Cofta, Piotr, 00210 Helsinki (FI)
(74) Representative: Read, Matthew Charles

(57) **Abstract**

A system for storing and releasing information including a portable device and a receiver. The portable device includes a secure memory, a memory buffer, an access control system for controlling output of the information from the secure memory only upon a user entering an authentication, and a transmitter. The receiver is separate from the portable device for receiving the information transmitted from the transmitter. The information can be stored in the memory buffer and transmitted from the memory buffer by the transmitter to the receiver without the user entering the authentication. The information can be stored in the secure memory and transmitted from the transmitter to the receiver only upon the user entering the authentication such that the system allows'alternatively releasing the information from the portable device with or without using the authentication.

## Description

### BACKGROUND OF THE INVENTION

### 1. Field of the Invention

The present invention relates to storing and dispensing information and, more particularly, to electronic ticket storing and dispensing.

### 2. Brief Description of Prior Developments

Tickets, also known as tokens or coupons, are used for many purposes. Tickets can be purchased and used to gain access to an event. For example, tickets are used to gain access to a sports stadium, a concert hall, or a movie theater. Tickets are also used as a prepayment for services, such as paying for a ride on a bus. Tickets are normally in paper form, but in recent years tickets are now being used in electronic form.

An electronic ticket is merely an information packet that is sent out to receive certain services or goods. When tickets are stored in an electronic form, an authentication system could be used before the ticket is allowed to be electronically dispensed. This adds security to prevent the tickets from unauthorized use. However, an authentication sequence requires a certain amount of time. This can be very inconvenient if tickets must be dispensed fast (e.g. when entering a bus) or under heavy stress (e.g. when entering a ballpark).

A faster way to dispense electronic tickets would be to store the electronic tickets in an unsecured memory location that does not require an authorization sequence to be dispensed, but this has the disadvantage of a lack of security. Thus, such a system does not prevent the tickets from unauthorized use. The ticket dispenser does not have a secure storage at all (so that all the tickets would reside in a buffer). This could be the case for a multi-pass electronic bus card or similar device. A pass is deducted from the device whenever it is requested by the reader. If the user unintentionally passes the card near the reader twice, two passes are deducted. If the card is stolen, a thief can use all the remaining passes.

There is a need to provide a secured storage of electronic ticket information, but which allows a faster way to dispense the electronic ticket information.

### SUMMARY OF THE INVENTION

In accordance with one aspect of the present invention, a system for storing and releasing information is provided including a portable device and a receiver. The portable device includes a secure memory, a memory buffer, an access control system for controlling output of the information from the secure memory only upon a user entering an authentication, and a transmitter. The receiver is separate from the portable device for receiving the information transmitted from the transmitter. The information can be stored in the memory buffer and transmitted from the memory buffer by the transmitter to the receiver without the user entering the authentication. The information can be stored in the secure memory and transmitted from the transmitter to the receiver only upon the user entering the authentication such that the system allows alternatively releasing the information from the portable device with or without using the authentication.

In accordance with another aspect of the present invention, a mobile terminal is provided comprising an output; a first system for storing information and releasing the stored information out the output upon a user entering an authentication into an input of the mobile terminal; and a second system for storing the information and releasing the stored information out the output without a user entering the authentication into the input. The first system comprises a secured memory location for storing the information and the second system comprises an unsecured memory location for storing the information.

In accordance with one method of the present invention, a method of releasing stored information from a portable electronic device is provided comprising steps of, when the information is stored in a secure memory location in the portable electronic device, entering an authentication into the portable electronic device before the information is transmitted from the secure memory location to an output of the portable electronic device, and when the information is alternatively stored in an unsecured memory location in the portable electronic device, transmitting the information to the output upon a predetermined event without entering the authentication into the portable electronic device.

In accordance with another method of the present invention, a method of releasing stored information from a portable electronic device is provided comprising steps of entering an authentication into the portable electronic device; transferring the information from a secured memory location in the portable electronic device to an unsecured memory location in the portable electronic device; outputting the information from the unsecured memory location at an output of the portable electronic device upon a predetermined event; and alternatively outputting the information from the secured memory location to the output without the step of transferring to the unsecured relocation.

In accordance with another method of the present invention, a method of storing information in a portable electronic device is provided comprising steps of inputting ticket information into the portable electronic device; and locating the input ticket information at either a secured memory location or an unsecured memory location, wherein access to the input ticket information when located at the secured memory location requires input of an authentication into the portable electronic device, and wherein access to the input ticket information when located at the unsecured memory location does not require input of the authentication into the portable electronic device.

### BRIEF DESCRIPTION OF THE DRAWINGS

The foregoing aspects and other features of the present invention are explained in the following description, taken in connection with the accompanying drawings, wherein:
Fig. 1 is a block diagram of a system incorporating features of the present invention;
Fig. 2 is a perspective view of a mobile radio telephone implementation of the portable device shown in Fig. 1 incorporating features of the present invention;
Fig. 3 is a representation of the architecture of a portable device terminal incorporating features of the present invention showing how information can be transferred and stored in the terminal;
Fig. 4 is a representation of the architecture and system shown in Fig. 3 with data flow for the situation where an electronic ticket is located and retrieved from a memory buffer;
Fig. 5 is a representation of the architecture and system shown in Fig. 3 with data flow for the situation where the electronic ticket information cannot be found in the memory buffer; and
Fig. 6 is a representation of the architecture of the terminal shown in Fig. 3 with data flow of transfer of information between the secured and unsecured memory locations.

### DETAILED DESCRIPTION OF THE PREFERRED EMBODIMENT

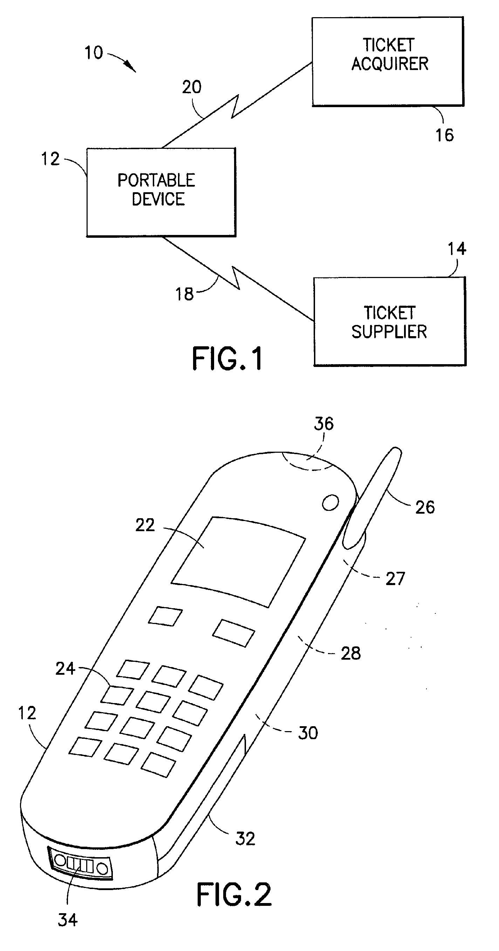

Referring to Fig. 1, there is shown a block diagram of a system 10 incorporating features of the present invention. Although the present invention will be described with reference to the single embodiment shown in the drawings, it should be understood that the present invention can be embodied in many alternate forms of embodiments. In addition, any suitable size, shape or type of elements or materials could be used.

The system 10 generally comprises a portable device 12, a ticket supplier 14, and a ticket acquirer 16. The portable device 12 can be selectively operably connected to the ticket supplier 14 by a connection 18. The connection 18 could comprise any suitable type of connection, such as wireless or fixed wire connection. In a preferred embodiment, the connection 18 comprises a wireless radio connection or infrared connection. The portable device 12 can be selectively operably connected to the ticket acquirer 16 by a connection 20. The connection 20 could comprise any suitable type of connection, such as a wireless or fixed wired connection. In a preferred embodiment, the connection 20 comprises a wireless radio connection or infrared connection.

Referring also to Fig. 2, a perspective view of one embodiment of the portable device 12 is shown. In this embodiment, the portable device 12 comprises a mobile radio telephone. However, in alternate embodiments, the portable device 12 could comprise any suitable type of portable electronic device, such as an electronic wallet, or a PDA. The telephone 12 generally comprises a display 22, a keypad 24, an antenna 26, a transceiver 27, a controller 28, a memory 30, a battery 32, and an electrical connector 34. However, in alternate embodiments, the telephone 12 could comprise additional or alternative components. For example, the telephone 12 could comprise an infrared output or transmitter 36.

The ticket supplier 14 is adapted to supply information along the connection 18 to the portable device 12. The information supplied by the ticket supplier 14 could comprise any suitable type of information, such as electronic ticket information, electronic coupon information, or electronic money information, for example. Examples of electronic information which could be transferred from the ticket supplier 14 to the portable device 12 include an electronic ticket for a sporting event, a movie theater, or a concert. Other examples of electronic information which could be transferred from the ticket supplier 14 to the portable device 12 include an electronic ticket for a bus ride, an airplane ride, a ferry ride, or a train ride. Of course, these are only examples. People skilled in the art could use features of the present invention with any suitable type of electronic information transfer, storage and dispensing.

The connection 18 could comprise a connection to the connector 34 or alternatively could comprise a wireless connection through the antenna 26. The electronic ticket information would be purchased by a user and subsequently loaded or downloaded onto the user's portable device 12. The electronic ticket information could comprise multiple tickets and/or different types of ticket information, such as train tickets and sporting event tickets.

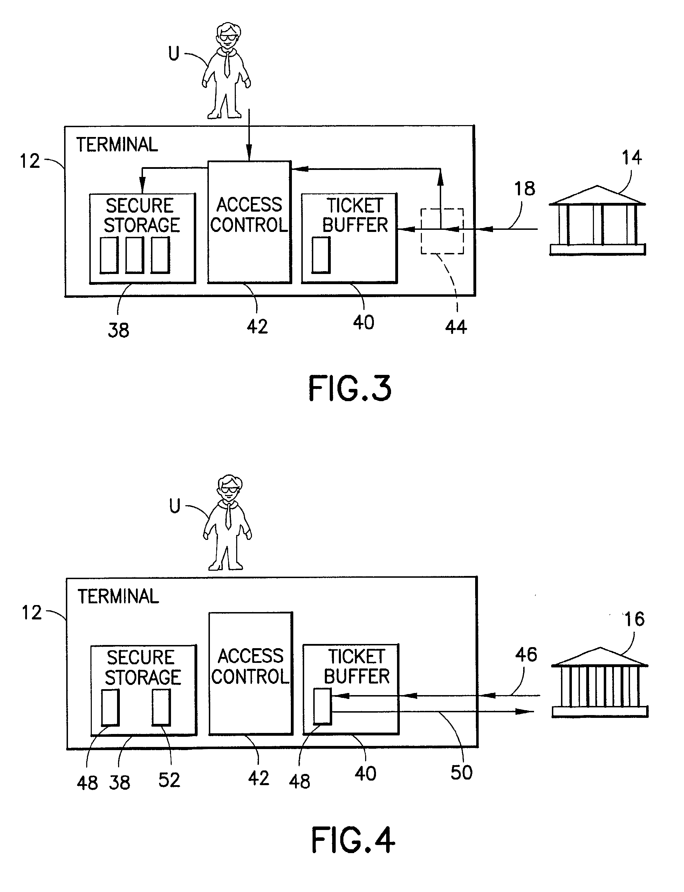

Referring also now to Fig. 3, the memory 30 of the terminal 12 includes a secure memory storage location 38 and an unsecured memory buffer location 40. The terminal 12 also comprises an access control system 42. In a preferred embodiment, the access control system 42 comprises the keypad 24, display 22, controller 28, and a portion of the memory 30. When the electronic ticket information is received by the terminal 12 through the connection 18, the information is stored in either the secure storage 38 or the ticket buffer 40. The terminal 12 could comprise a selector 44 for determining whether the received information is stored in the secure storage 38 or ticket buffer 40. The selector 44 could be automatically controlled by the controller 28 or, alternatively, could be manually controlled by the user selecting the storage location.

In a preferred embodiment, the secure storage 38 and the ticket buffer 40 are both adapted to store a plurality of electronic tickets therein. However, in alternate embodiment, one or both of the storage locations 38, 40 could be adapted to limit the number of electronic tickets that could be stored therein. In a preferred embodiment, the access control 42 is adapted to selectively transfer information between the secure storage 38 and the ticket buffer 40. However, in alternate embodiment, this selective transfer feature might not be provided. The selective transfer feature could be manually controlled by the user U and/or could be automatically controlled by the access control 42 based upon a predetermined event.

One or both of the storage locations 38, 40 could be adapted to respectively prevent storage of predetermined types of tickets therein. For example, the terminal 12 could be configured to prevent storage of electronic ticket information valued at more than $20.00 in the ticket buffer 40. As another example, the terminal 12 could be configured to prevent storage of certain types of ticket information in the ticket buffer 40 for more than a predetermined period of time, such as two-five minutes for example. If the predetermined period of time elapses or a predetermined time of day, the terminal 12 could be configured to automatically transfer the ticket information from the ticket buffer 40 to the secure storage 38. However, such a system need not be provided.

When the information is stored in the secure storage 38, it is preferably stored through the access control 42. The access control 42 is preferably adapted to control the flow of information out of the secure storage 38 when the user U inputs an authentication into the access control 42. In a preferred embodiment, the authentication comprises a PIN number. However, in alternate embodiments, any suitable type of authentication could be used. For example, the authentication could comprise biometric information, such as a fingerprint or voice recognition, or voice recognition of a verbal password.

In one type of embodiment, the input information from connection 18 could be automatically stored in the ticket buffer 40 unless the user U actuates the access control 42 to transfer the information into the secure storage 38. In one type of alternate embodiment, the input information from the connection 18 could be automatically stored in the secure storage 38 unless the user U actuates the access control 42 to prevent transfer of the information directly into the secure storage 38. In other alternate embodiments, any suitable method or system for alternatively storing information in the secure storage 38 or ticket buffer 40 could be provided. In one type of alternate embodiment, the access control 42 could be configured to recognize different types of information and automatically select the storage location 38 or 40 based upon this recognition. In this alternate embodiment, the recognition could comprise a dollar value assigned to the ticket information or any other suitable type of code to differentiate different types of tickets from each other.

Referring now to Fig. 4, data flow between the terminal 12 and the ticket acquirer 16 is shown when dispensing information from the ticket buffer 40. The ticket acquirer 16 could comprise any suitable type of electronic ticket information receiver. The ticket acquirer 16 would be located at a predetermined location, such as an entrance to a stadium, train station, or on a bus, for example. The ticket acquirer 16 could be connected to a database and a comparer for comparing information received by the ticket acquirer 16 to a list of pre-purchased tickets. In an alternate embodiment, the ticket acquirer 16 could comprise its own database for comparing identification information in the electronic ticket information to predetermined data for authenticating use of the electronic ticket information to gain access to the event or service or goods.

In the embodiment shown in Fig. 4, the ticket acquirer 16 sends a request 46 to the terminal 12. The request 46 could comprise a request for a specific type of ticket, or a specific value of ticket. If the ticket information requested is located in the ticket buffer 40, such as when the ticket acquirer 16 requests first ticket information 48 which is located in the buffer 40, the terminal 12 is adapted to transmit 50 the first ticket information 48 to the ticket acquirer 16. No interaction by the user U is required for this process. The user U does not need to use the access control 42 and none of the second type of information 52 stored in the secure storage is affected. In an alternate embodiment, rather than a request being made by the ticket acquirer 16, the system could comprise the user U merely pressing any one of the keys on the keypad 24 to initiate the transfer 50 of the first ticket information 48 to the ticket acquirer 16. In another alternate embodiment, the system could comprise both a request by the ticket acquirer 16 as well as the user merely pressing any one of the keys on a keypad 24 to initiate the transfer, or a specific one of the keys.

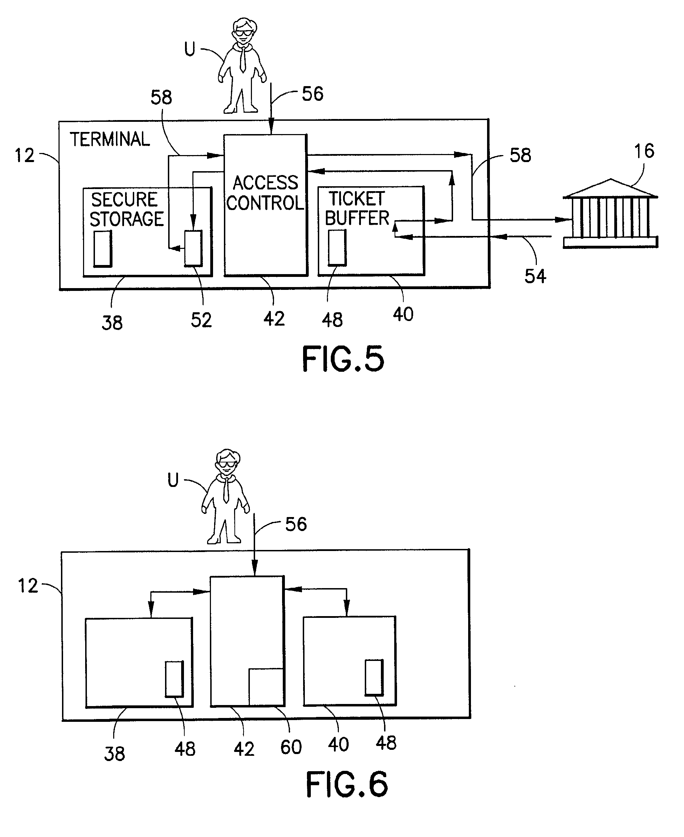

Referring now also to Fig. 5, data flow between the terminal 12 and the ticket acquirer 16 is shown when dispensing information from the secure storage 38. The ticket acquirer 16 makes a request 54 for a second predetermined type of ticket information 52. When the information 52 is not found in the ticket buffer 40, the request proceeds to the access control 42. The access control 42 waits until the user U enters an authorization 56 before the second type of information 52 might be released.

After the user inputs the authorization 56 the request 54 proceeds to the secure storage 38. If the second type of information 52 is found, the information 52 is transferred 58 back through the access control 42 and out and output of the terminal 12 to the ticket acquirer 16. The output could be the antenna 26 or the output 36, or any other suitable type of output. If the user U does not input the correct authorization into the access control 42, the access control 42 prevents the information 52 from leaving the secure storage 38. The access control unit interacts with the user in order to get his approval before the electronic ticket information is transferred out of the secure storage 38. The second type of information 52 could comprise high-value information, such as concert ticket information or sporting event information. Thus, the increased security through the access control 42 prevents the higher value information 52 from being stolen and misused.

Referring now to Fig. 6, information can be transferred between the secure storage 38 and the ticket buffer 40 through the access control 42. The transfer of information between the two locations 38, 40 could be automatic and/or user actuated. For an automatic system, the access control 42 could comprise a clock 60. The access control 42 could be configured to automatically transfer information 48 from the secure storage 38 to the ticket buffer 40 based upon the time of day, or a predetermined period of time after a predetermined event. For example, the predetermined event could be the amount of time which the ticket buffer 40 is empty, or if information 48 is dispensed from the ticket buffer 40. Alternatively, the access control 42 could be configured to transfer the information 48 from the secure storage 38 to the ticket buffer 40 upon the user authentication 56 being entered into the access control 42.

The system could also be configured to automatically transfer information 48 from the ticket buffer 40 to the secure storage 38 based upon the time of day or occurrence of a predetermined event. The predetermined event could be the amount of time which the information 48 has been located in the ticket buffer 40 or when the user manipulates the keypad 24 to initiate a transfer. In an alternate embodiment, any suitable type of method or system for transferring information between the secure storage 38 and the ticket buffer 40 could be provided. In one type of alternate embodiment, transfer of the information 48 from the ticket buffer 40 to the secure storage 38 might not comprise use of the access control 42.

The present invention is relevant to electronic ticketing, but can be extended to all cases where certain information (which is normally kept protected) must be released in a convenient way to other parties. The invention can also be used for Digital Rights Management or for other forms of information dispensing systems. The present invention improves the usability of a ticket dispensing process where tickets are sent from a user's terminal to a ticket acquirer.

In a ticketing system, the acquirer can request the ticket from the terminal releasing the ticket. If the terminal can hold several tickets of different kind, the acquirer can send a request for the specific type of ticket. Prior development models of electronic ticketing assumes that the user either 1) keeps tickets in a secure storage inside a terminal and approves their release with some form of authentication (e.g. by providing a PIN (personal identification number) or 2) keeps all tickets in an unprotected storage so'that an acquirer can receive tickets without the user's consent or interaction.

Even though the first model provides for a good protection against the theft of tickets, it is very inconvenient, such as when tickets must be dispensed fast or under heavy stress. The second model provides no protection against theft, misuse or faults at the acquirer equipment.

The present invention can be used to allow tickets to be stored in a secure storage and the user's approval is needed to release them. There is preferably a ticket buffer. When the acquirer requests the ticket, it is verified whether it is located in the buffer or in the secure storage. If the ticket is located in the buffer, the acquirer can receive it without further user approval. The reception can be done without any user intervention. If the ticket is not present in the buffer, it can be released only if the user authorizes it to be released. The user can preferably freely move tickets between the secure storage and the ticket buffer at his convenience (e.g. at a bus stop). However, accessing secure storage still requires a user authentication.

The secure storage (or the terminal) can be configured to move tickets from the secure storage to the buffer at specified times (e.g. once a day) or under specific conditions (e.g. moving a train ticket to the buffer once a bus ticket has been dispensed). The secure storage can be further configured to remove tickets from the buffer after some time or under specific conditions.

Even though one thinks of tickets mostly in a local environment, the identical method can be also be used to release tickets over remote connections (e.g. over WAP) or to internally present tickets to other parts of the terminal (e.g. display them on the screen or pass them for further processing).

The present invention allows for convenient yet secure release of tickets. Tickets can preferably stay in the unprotected area for a limited time and in limited quantity, so that if the terminal is lost, the loss is limited. Still, highly valuable tickets can preferably be released only directly from the secure storage. In addition, tickets can be conveniently transferred to the acquirer with no delay or without the user's intervention which comes in handy for mass-transit or under stressful situations.

The present invention also allows a quicker and easier way to use electronic tickets with portable radio telephones. The ticket presentation time needed for a ticket acquirer of a bus ticket could be as fast as 150 milliseconds. This time is not reachable if the ticket is located in some secure storage inside the terminal. It must be as close to the interface as possible and not encrypted by the terminal (bus tickets are usually encrypted once by the ticketing system). Otherwise, there are some tickets and vouchers which require secure storing in the terminal. These tickets (like flight tickets or a right voucher for some valuable content) must still be quite easily accessible. Such systems could be implemented according to this invention.

The present invention combines both security and faster access to allow a ticket dispensing terminal to hold both low value and high value tickets, while allowing the user to control a balance of exposure or risk (in case of theft or loss) and convenience. Specifically, the invention allows for fast ticket release, without having the user to approve every transaction. The invention allows the user to prepare tickets in advance at his convenience. The invention allows a pre-programming of the process of ticket release, such that it can automate the process of moving tickets between the secure storage and the buffer. The present invention provides a hybrid system for dispensing electronic ticket information in two forms; without a security protection and, with security protection. The choice between the two forms of protection and dispensing can be selected by the user and/or by the ticket supplier or portable device manufacturer. The present invention allows the same device to carry tickets of different importance that can be requested by a same mechanism. Therefore, the receiving system does not need to be modified.

The present invention can be implemented in any device that is used to release tickets or ticket-like information. This includes concepts such as electronic wallets, Digital Rights Management, proximity tickets, etc.. The best implementation includes the device that provides tamper resistant secure storage (e.g. smart card), the reasonable user interface (for user approval) and the local or remote connection (to interact with the acquirer). A mobile phone equipped with WIM and WAP, or Bluetooth™, or an infrared connection, presents a good implementation platform.

It should be understood that the foregoing description is only illustrative of the invention. Various alternatives and modifications can be devised by those skilled in the art without departing from the invention. Accordingly, the present invention is intended to embrace all such alternatives, modifications and variances which fall within the scope of the appended claims.

## Claims

1. A system for storing and releasing information comprising:
a portable device comprising a secure memory, a memory buffer, an access control system for controlling output of the information from the secure memory, and a transmitter; and
a receiver separate from the portable device for receiving the information transmitted from the transmitter,
wherein the information can be stored in the memory buffer and transmitted from the memory buffer by the transmitter to the receiver without the user entering the authentication, and wherein the information can be stored in the secure memory and transmitted by the transmitter to the receiver only upon the user entering the authentication such that the system allows alternatively releasing the information from the portable device with or without using the authentication.

2. A system for storing and releasing information as in claim 1 wherein the information comprises electronic ticket information, and the transmitter is adapted to transmit the ticket information electronically.

3. A system for storing and releasing information as in claim 1 wherein the portable device comprises a radio telephone with a transceiver.

4. A system for storing and releasing information as in claim 1 wherein the portable electronic device is adapted to transfer the information from the secure memory to the memory buffer upon a predetermined event.

5. A system for storing and releasing information as in claim 4 wherein the predetermined event comprises the user entering an authentication into the portable device.

6. A system for storing and releasing information as in claim 4 wherein the portable device comprises means for automatically transferring the information from the secure memory to the memory buffer upon the predetermined event or time.

7. A system for storing and releasing information as in claim 1 wherein the secure memory is adapted to store a plurality of different types of the information.

8. A system for storing and releasing information as in claim 7 wherein the different types of information comprise different types of electronic ticket information.

9. A system for storing and releasing information as in claim 1 wherein the access control system is adapted to control output of the information from the secure memory only upon a user entering an authentication.

10. A mobile terminal comprising:
an output;
a first system for storing information and releasing the stored information out the output upon a user entering an authentication into an input of the mobile terminal; and
a second system for storing the information and releasing the stored information out the output without a user entering the authentication into the input,
wherein the first system comprises a secured memory location for storing the information and the second system comprises an unsecured memory location for storing the information.

11. A mobile terminal as in claim 10 wherein the input comprises a keypad for inputting the authentication into the mobile terminal.

12. A mobile terminal as in claim 10 wherein the mobile terminal comprises a radio telephone with a transceiver.

13. A mobile terminal as, in claim 12 wherein the information comprises electronic ticket information.

14. A mobile terminal as in claim 10 wherein the first system comprises means for storing a plurality of different types of electronic ticket information, and the mobile terminal further comprises means for selecting one of the plurality of different types of ticket information for releasing out the output.

15. A mobile terminal as in claim 10 further comprising means for transferring the information from the secured memory location to the unsecured location upon a predetermined event.

16. A mobile terminal as in claim 15 wherein the predetermined event comprises passage of time.

17. A mobile terminal as in claim 15 wherein the predetermined event comprises the user entering the authentication into the input of the mobile terminal.

18. A method of releasing stored information from a portable electronic device comprising steps of:
when the information is stored in a secure memory location in the portable electronic device, entering an authentication into the portable electronic device before the information is transmitted from the secure memory location to an output of the portable electronic device, and
when the information is alternatively stored in an unsecured memory location in the portable electronic device, transmitting the information to the output upon a first predetermined event without entering the authentication into the portable electronic device.

19. A method as in claim 18 wherein the first predetermined event comprises a ticket acquirer requesting the information.

20. A method as in claim 18 wherein the first predetermined event comprises a user acting upon the device in a predetermined fashion.

21. A method as in claim 18 wherein the first predetermined fashion comprises the user pressing a key on the device.

22. A method as in claim 21 wherein the first predetermined event also comprises a ticket acquirer requesting the information.

23. A method as in claim 18 further comprising transferring the information from the secured memory location to the unsecured memory location upon a second predetermined event.

24. A method as in claim 23 wherein the second predetermined event comprises a user inputting the authentication into the portable electronic device.

25. A method as in claim 23 wherein the second predetermined event comprises passage of time.

26. A method as in claim 23 wherein the information comprises first and second informations, and wherein the second predetermined event comprises dispensing the first information out the output and the step of transferring comprises transferring the second information from the secured memory location to the unsecured memory location.

27. A method as in claim 18 wherein, when the information is transmitted from the secure memory location to the output, the information is not transferred to the unsecured memory location.

28. A method as in claim 18 further comprising storing a plurality of the information in the secure memory location and selectively dispensing the information from the portable electronic device.

29. A method as in claim 28 wherein the portable electronic device comprises a radio telephone and the step of selectively dispensing the information from the portable electronic device comprises a user actuating a key on a keypad of the radio telephone to individually dispense a singular one of the information.

30. A method of releasing stored information from a portable electronic device comprising steps of:
entering an authentication into the portable electronic device;
transferring the information from a secured memory location in the portable electronic device to an unsecured memory location in the portable electronic device;
outputting the information from the unsecured memory location at an output of the portable electronic device upon a predetermined event; and
alternatively outputting the information from the secured memory location to the output without the step of transferring to the unsecured relocation.

31. A method as in claim 30 further comprising a user selecting with a keypad of the portable electronic device between either the steps of transferring and outputting from the unsecured memory location, or the step of outputting from the secured memory location.

32. A method as in claim 30 wherein the predetermined event comprises a user pressing a key on the portable electronic device.

33. A method as in claim 30 wherein the predetermined event comprises passage of time.

34. A method as in claim 30 wherein the information comprises first and second informations, and wherein the predetermined event comprises dispensing the first information out the output and the step of transferring comprises transferring the second information from the secured memory location to the unsecured memory location.

35. A method as in claim 30 wherein the information comprises electronic ticket information.

36. A method of storing information in a portable electronic device comprising steps of:
inputting ticket information into the portable electronic device; and
locating the input ticket information at either a secured memory location or an unsecured memory location, wherein access to the input ticket information when located at the secured memory location requires input of an authentication into the portable electronic, device, and wherein access to the input ticket information when located at the unsecured memory location does not require input of the authentication into the portable electronic device.

37. A method as in claim 36 wherein the portable electronic device comprises a radio telephone with a transceiver, and the step of inputting the ticket information into the portable electronic device comprises receiving the ticket information by an antenna connected to the receiver.

38. A method as in claim 37 wherein the step of inputting the ticket information into the portable electronic device comprises inputting a plurality of the ticket informations into the portable electronic device at a same time.

39. A method as in claim 36 further comprising transferring input ticket information from the secured memory location to the unsecured memory location upon a predetermined event, and temporarily storing the input ticket information in the unsecured memory location until dispensed from the portable electronic device by a user.
